# EUROPÄISCHE PATENTSCHRIFT

(11) **EP 3 587 218 B1**
(45) Veröffentlichungstag und Bekanntmachung des Hinweises auf die Patenterteilung: **09.02.2022**
(21) Anmeldenummer: 19175931.5
(22) Anmeldetag: 22.05.2019
(51) Int. Cl.: B62D 1/22

(54) **SYSTEM FÜR EIN DOPPELLENKER-KRAFTFAHRZEUG**
SYSTEM FOR MOTOR VEHICLE WITH TWO STEERING WHEELS
SYSTÈME POUR UN VÉHICULE AUTOMOBILE À DEUX VOLANTS

(30) Priorität: 25.06.2018 AT 1822018
(43) Veröffentlichungstag der Anmeldung: 01.01.2020
(73) Patentinhaber: MAN Truck & Bus SE, 80995 München (DE)
(72) Erfinder: Stastny, Christian, 4030 Linz (AT); Artmayr, Robert, 4540 Bad Hall (AT)
(74) Vertreter: v. Bezold & Partner Patentanwälte - PartG mbB

(56) Entgegenhaltungen:
- WO-A1-2007/111543
- WO-A1-2018/037181
- DE-A1-102009 043 606
- FR-A1- 3 055 295
- JP-A- H08 258 643
- JP-U- S57 139 473
- US-A- 4 911 261
- US-A1- 2005 231 907

## Beschreibung

Die Erfindung betrifft ein System für ein Doppellenker-Kraftfahrzeug, insbesondere ein Fahrschul-Doppellenker-Kraftfahrzeug, und ein Kraftfahrzeug mit dem System.

Für den Fahrschulbetrieb können Doppellenker-Kraftfahrzeuge zum Einsatz kommen, die eine fahrerseitige Lenkvorrichtung und eine beifahrerseitige Lenkvorrichtung mit jeweils eigenem Lenkrad aufweisen. Das Fahrzeug kann somit sowohl von der Fahrerseite von einem Fahrschüler als auch von der Beifahrerseite von einem Fahrlehrer gelenkt werden. Ein Doppellenkersystem ist bspw. aus der WO2018/037181 A1 bekannt.

Weitere Doppellenkerfahrzeuge sind beispielsweise aus der FR 3 055 295 A1, der DE 10 2009 043606 A1, der US 4 911 261 A und der JP S57 139473 U bekannt.

Dabei offenbart die US 4 911 261 A die folgenden Merkmale des Anspruchs 1, und auch die mit diesen Merkmalen übereinstimmenden Merkmale des Anspruchs 8: ein System für ein Doppellenker-Kraftfahrzeug, insbesondere ein Fahrschul-Doppellenker-Kraftfahrzeug, aufweisend: eine erste, insbesondere fahrerseitige, Lenkvorrichtung zum Lenken des Kraftfahrzeugs, insbesondere durch einen Fahrschüler; eine zweite, insbesondere beifahrerseitige, Lenkvorrichtung zum Lenken des Kraftfahrzeugs, insbesondere durch einen Fahrlehrer; einen Systemträger, an dem die erste Lenkvorrichtung und die zweite Lenkvorrichtung angebracht sind.

Für ein Einzellenkerkraftfahrzeug offenbart die WO 2007/111543 A1 eine Innenbrandschutzwand mit einer Aussparung für einen Motortunnel.

Doppellenker-Kraftfahrzeuge haben typischerweise den Nachteil, dass sie nur in sehr kleinen Stückzahlen mit entsprechend hohen Produktionskosten produziert werden können. Die hohen Produktionskosten ergeben sich insbesondere aus der Vielzahl von notwendigen Modifikationen zu den in vergleichsweise hohen Stückzahlen produzierten Einzellenker-Kraftfahrzeugen. Die zusätzliche Anordnung der zweiten Lenkvorrichtung für das Doppellenker-Kraftfahrzeug kann eine umfangreiche Anpassung der im Fahrerhaus vorhandenen weiteren Komponenten, insbesondere im Hinblick auf die gesamte Elektrik, erfordern.

Der Erfindung liegt die Aufgabe zu Grunde, ein System für ein Doppellenker-Kraftfahrzeug zu schaffen, das Nachteile im Stand der Technik überwindet.

Die Aufgabe wird gelöst durch die Merkmale der unabhängigen Ansprüche 1 und 8. Vorteilhafte Weiterbildungen sind in den abhängigen Ansprüchen und der Beschreibung angegeben.

Die Erfindung schafft ein System für ein Doppellenker-Kraftfahrzeug, insbesondere ein Fahrschul-Doppellenker-Kraftfahrzeug. Das System weist eine erste, insbesondere fahrerseitige, Lenkvorrichtung (z. B. Lenkradsäule mit Lenkrad) zum Lenken des Kraftfahrzeugs, insbesondere durch einen Fahrschüler, auf. Das System weist eine zweite, insbesondere beifahrerseitige, Lenkvorrichtung (z. B. Lenkradsäule mit Lenkrad) zum Lenken des Kraftfahrzeugs, insbesondere durch einen Fahrlehrer auf. Das System weist einen Systemträger, an dem die erste Lenkvorrichtung und die zweite Lenkvorrichtung (z. B. lösbar und/oder direkt) angebracht sind, auf. Das System weist mindestens eine elektrische Komponente, die zur Kabelzusammenführung, zur elektrischen Absicherung und/oder zum Schalten weiterer elektrischer Komponenten des Kraftfahrzeugs ausgebildet ist, auf. Die mindestens eine elektrische Komponente ist neben der zweiten Lenkvorrichtung am Systemträger (z. B. lösbar) angebracht (z. B. direkt angrenzend an die zweite Lenkvorrichtung).

Im Vergleich zu einem Einzellenker-Kraftfahrzeug wird beim System für ein Doppellenker-Kraftfahrzeug bezüglich der elektrischen Komponenten eine alternative Anordnung vorgeschlagen (beim Einzellenker-Kraftfahrzeug können die elektrischen Komponenten dort angeordnet sein, wo beim Doppellenker-Kraftfahrzeug die zweite Lenkvorrichtung angeordnet ist). Es wird allerdings vorgeschlagen, die elektrischen Komponenten nicht etwa auf dem Motortunnel oder an der Fahrerhausrückwand anzuordnen, wie es zunächst aus Aufwands- und Bauraumgründen sinnvoll erscheint. Stattdessen wird vorgeschlagen, die elektrischen Komponenten durch Anordnung neben der zweiten Lenkvorrichtung weiterhin im Beifahrerbereich des Systemträgers anzuordnen. Dies kann den entscheidenden Vorteil bieten, dass bei der Montage von Einzellenker- und Doppellenker-Kraftfahrzeug die gleiche Verkabelung zum Anschließen an die elektrischen Komponenten verwendet werden kann. Insbesondere ist keine längere Verkabelung beim Doppellenker-Kraftfahrzeug nötig, wie sie bspw. notwendig wäre, wenn man die elektrischen Komponenten auf dem Motortunnel oder an der Fahrerhausrückwand montieren würde. Es wird somit vorgeschlagen, eine aus Aufwands- und Bauraumgründen zunächst nachteilig erscheinende Anordnung der elektrischen Komponenten am Systemträger auf der Beifahrerseite zu wählen (hier steht nämlich nur wenig Bauraum zur Verfügung und ggf. ist eine komplizierte Anordnung und/oder eine teilweise Umkonstruktion der elektrischen Komponenten notwendig). Es stellt sich heraus, dass der Mehraufwand zum Platzieren der elektrischen Komponenten auf der Beifahrerseite des Systemträgers durch den Minderaufwand während der Montage aufgrund der Möglichkeit der Nutzung der gleichen Verkabelung bei Einzellenker- und Doppellenker-Kraftfahrzeug überkompensiert werden können. Eine solche Anordnung kann aus den gleichen Gründen auch vorteilhaft gegenüber einer vergleichsweise aufwandsarmen Anordnung der elektrischen Komponenten auf dem Motortunnel oder an der Fahrerhausrückwand sein, da dies eine aufwendige Änderung der Verkabelung zur Folge haben kann.

Es wird darauf hingewiesen, dass die hierin beispielhaft vorgeschlagenen Anordnungen und Umkonstruktionen der elektrischen Komponenten sich als besonders geeignet dafür herausgestellt haben, das Ziel bezüglich der gleichen Verwendung der Verkabelung zum Anschließen an die elektrischen Komponenten bei Einzellenker- und Doppellenkerkraftfahrzeug zu erreichen.

In einer Ausführungsform sind mehrere elektrische Komponenten vorgesehen, die zumindest teilweise beabstandet zueinander und/oder verteilt um die zweite Lenkvorrichtung herum an dem Systemträger angebracht sind. Die Separierung der elektrischen Komponenten und Anordnung um die Lenkvorrichtung herum bietet mehr Anordnungsspielraum um tatsächlich eine Anordnung zu finden, die es ermöglicht, die gleiche Verkabelung bei Einzellenker- und Doppellenker-Kraftfahrzeug zum Anschließen an die elektrischen Komponenten zu verwenden.

Gemäß der Erfindung weist die mindestens eine elektrische Komponente eine Zentralelektrik des Kraftfahrzeugs, einen Sicherungshalter zum Halten von einer oder mehreren (zweckmäßig elektrischen) Sicherungen des Kraftfahrzeugs und/oder einen Relaishalter zum Halten von Relais des Kraftfahrzeugs auf.

Beispielsweise kann der Relaishalter oberhalb (bzgl. einer Vertikalrichtung) von der Zentralelektrik und/oder dem Sicherungshalter des Kraftfahrzeugs angeordnet sein.

Zum Beispiel kann der Sicherungshalter an der Zentralelektrik angebracht sein, insbesondere unterhalb (bzgl. einer Vertikalrichtung) der Zentralelektrik.

In einem Ausführungsbeispiel ist mindestens eine elektrische Komponente, insbesondere ein Relaishalter und/oder ein Sicherungshalter, mehrlagig und/oder mehrstufig ausgebildet, insbesondere zum Halten von Elementen (z. B. Sicherungen, Relais) in mehreren (z. B. parallelen) Ebenen. Der Aufwand hinsichtlich der Konstruktion und/oder Montage in mehreren Ebenen kann dadurch gerechtfertigt sein, dass eine solche bauraumsparende Konstruktion die Anordnung am Systemträger neben der zweiten Lenkvorrichtung ggf. erst möglich machen oder zumindest erleichtern kann. Somit kann dieser Mehraufwand leicht überkompensiert werden durch die Möglichkeit, die gleiche Verkabelung beim Einzellenker-Kraftfahrzeug und beim Doppellenker-Kraftfahrzeug zu verwenden.

In einem weiteren Ausführungsbeispiel ist ein Relaishalter mehrstufig an dem Systemträger anbringbar, insbesondere mit einer ersten Halterstufe zur (insbesondere direkten) Montage an den Systemträger und einer zweiten Halterstufe zur (insbesondere direkten) Montage an die erste Halterstufe.

Alternativ oder zusätzlich ist ein Sicherungshalter mehrstufig an dem Systemträger anbringbar, insbesondere mit einer ersten Sicherungshalterstufe zur (insbesondere direkten) Montage an den Systemträger und einer zweiten Sicherungshalterstufe zur (insbesondere direkten) Montage an die erste Sicherungshalterstufe.

Zweckmäßig kann jede Schaltelementhalterstufe und/oder Sicherungshalterstufe dazu ausgebildet sein, mehrere Elemente (Sicherungen oder Relais) zu halten.

Gemäß der Erfindung weist der Systemträger eine umgedrehte (auf dem Kopf stehende) U-Form (d.h. Π-Form) mit einer mittigen Motortunnelaussparung auf und die zweite Lenkvorrichtung und die mindestens eine elektrische Komponente sind an demselben Vertikalschenkel (z. B. Vertikalschenker der Beifahrerseite) der umgedrehten U-Form des Systemträgers angebracht.

In einer weiteren Ausführungsform ist die Zentralelektrik und/oder der Sicherungshalter im Wesentlichen (z. B. zu mehr als 50 %) im Bereich einer unteren Hälfte des Vertikalschenkels angeordnet. Alternativ oder zusätzlich ist der Relaishalter im Wesentlichen (z. B. zu mehr als 50 %) im Bereich einer oberen Hälfte des Vertikalschenkels angeordnet.

In einer weiteren Ausführungsform ist mindestens eine elektrische Komponente, insbesondere eine Zentralelektrik und/oder ein Sicherungshalter, hinter einer Lenkwelle der zweiten Lenkvorrichtung angeordnet (betrachtet in einer Blickrichtung eines auf einem Fahrzeugsitz (z. B. Beifahrersitz) sitzenden Insassen des Kraftfahrzeugs mit Blickrichtung auf den Systemträger bzw. in Vorwärtsfahrrichtung). Alternativ oder zusätzlich weist mindestens eine elektrische Komponente, insbesondere eine Zentralelektrik, einen Kommunikationsschnittstellenbereich des Kraftfahrzeugs zur Ankoppelung von Programmier- und Diagnosegeräten auf. Alternativ oder zusätzlich ist auf mindestens eine elektrische Komponente, insbesondere eine Zentralelektrik, ein zentraler Bordrechner aufgesteckt. Alternativ oder zusätzlich ist mindestens eine elektrische Komponente, insbesondere eine Zentralelektrik und/oder ein Sicherungshalter, insbesondere horizontal neben einer Motortunnelaussparung des Systemträgers angeordnet. Zweckmäßig kann die Zentralelektrik über einen insbesondere oberen Halter an dem Systemträger insbesondere lösbar angebracht (z. B. befestigt) sein.

In einer Ausführungsvariante ist mindestens eine elektrische Komponente, insbesondere ein Relaishalter, (z. B. zum überwiegenden Teil oder vollständig) auf einer der ersten Lenkvorrichtung abgewandten Seite der zweiten Lenkvorrichtung angeordnet. Alternativ oder zusätzlich ist mindestens eine elektrische Komponente, insbesondere eine Zentralelektrik und/oder ein Sicherungshalter, (z. B. zum überwiegenden Teil oder vollständig) auf einer der ersten Lenkvorrichtung zugewandten Seite der zweiten Lenkvorrichtung angeordnet.

In einer weiteren Ausführungsvariante ist der Systemträger als ein Systemträgerblech ausgebildet, eine Längsachse des Systemträgers verläuft in einer Querrichtung (Breitenrichtung) des Kraftfahrzeugs und/oder der Systemträger weist eine Motortunnelaussparung auf.

Es ist möglich, dass der Systemträger mehrteilig oder einteilig ausgebildet ist.

In einer Ausführungsform ist das System, insbesondere der Systemträger, zum wahlweisen Aufbau eines Einzellenker-Kraftfahrzeugs aufweisend lediglich die erste Lenkvorrichtung oder die zweite Lenkvorrichtung und eines Doppellenker-Kraftfahrzeugs aufweisend die erste Lenkvorrichtung und die zweite Lenkvorrichtung konfiguriert.

In einer weiteren Ausführungsform ist die mindestens eine elektrische Komponente beim Einzellenker-Kraftfahrzeug zumindest teilweise an einer Position an dem Systemträger angebracht, an dem die zweite Lenkvorrichtung beim Doppellenker-Kraftfahrzeug an dem Systemträger angebracht ist.

In einem Ausführungsbeispiel ist das Einzellenker-Kraftfahrzeug als ein Linkslenker-Kraftfahrzeug ausgebildet und weist lediglich die erste Lenkvorrichtung auf oder das Einzellenker-Kraftfahrzeug ist als ein Rechtslenker Kraftfahrzeug ausgebildet und weist lediglich die zweite Lenkvorrichtung auf.

Alternativ kann das Einzellenker-Kraftfahrzeug wahlweise als ein Linkslenker-Kraftfahrzeug mit lediglich der ersten Lenkvorrichtung oder ein Rechtslenker-Kraftfahrzeug mit lediglich der zweiten Lenkvorrichtung ausbildbar sein. Dies ermöglicht somit die Nutzung der gleichen Verkabelung zum Anschließen an die elektrischen Komponenten bei drei Fahrzeugtypen, nämlich Linkslenker-Einzellenker-Kraftfahrzeug, Rechtslenker-Einzellenker-Kraftfahrzeug und Doppellenker-Kraftfahrzeug.

In einem weiteren Ausführungsbeispiel sind mindestens eine Verkabelung (zum Beispiel Kabelbaum) (z. B. mehrere oder sämtliche Kabelbäume) zum Anschließen an die mindestens eine elektrische Komponente beim Einzellenker-Kraftfahrzeug (z. B. Linkslenker-Einzellenker-Kraftfahrzeug oder Rechtslenker-Einzellenker-Kraftfahrzeug) und mindestens eine Verkabelung (zum Beispiel Kabelbaum) (z. B. mehrere oder sämtliche Kabelbäume) zum Anschließen an die mindestens eine elektrische Komponente beim Doppellenker-Kraftfahrzeug als Gleichteile ausgebildet.

In einer weiteren Ausführungsform sind der Systemträger beim Einzellenker-Kraftfahrzeug und der Systemträger beim Doppellenker-Kraftfahrzeug als Gleichteile ausgebildet und/oder die elektrischen Komponenten sind zumindest teilweise als Gleichteile ausgebildet. Es ist möglich, dass eine Zentralelektrik beim Einzellenker-Kraftfahrzeug und eine Zentralelektrik beim Doppellenker-Kraftfahrzeug als Gleichteile ausgebildet sind und/oder ein Sicherungshalter beim Einzellenker-Kraftfahrzeug und ein Sicherungshalter beim Doppellenker-Kraftfahrzeug als unterschiedliche Teile ausgebildet sind. Alternativ oder zusätzlich sind ein Relaishalter beim Einzellenker-Kraftfahrzeug und ein Relaishalter beim Doppellenker-Kraftfahrzeug als unterschiedliche Teile ausgebildet.

Zum Beispiel kann der Relaishalter und/oder Sicherungshalter beim Einzellenker-Kraftfahrzeug einstufig und/oder einlagig ausgebildet sein (zum Halten von Sicherungen bzw. Schaltelementen in nur einer Ebene). Zusätzlich können der Relaishalter und/oder Sicherungshalter mehrstufig und/oder mehrlagig ausgebildet sein (zum Halten von Sicherungen bzw. Relais in mehreren Ebenen).

Die Erfindung betrifft auch ein Kraftfahrzeug, insbesondere ein Nutzfahrzeug (z. B. Lastkraftwagen oder Omnibus), mit einem System wie oben beschrieben.

Die zuvor beschriebenen bevorzugten Ausführungsformen und Merkmale der Erfindung sind beliebig miteinander kombinierbar. Die Erfindung ist jedoch definiert durch die Ansprüche. Weitere Einzelheiten und Vorteile der Erfindung werden im Folgenden unter Bezug auf die beigefügten Zeichnungen beschrieben. Es zeigen:
- Figur 1: eine schematische Darstellung eines Doppellenkersystems mit zwei Lenkerarbeitsplätzen in einer Vorderansicht;
- Figur 2: eine schematische Darstellung eines Abschnitts eines Systemträgers des Doppellenkersystems in einer Rückansicht;
- Figur 3: eine schematische Darstellung eines Abschnitts des Systemträgers des Doppellenkersystems in einer Vorderansicht;
- Figur 4: eine schematische Darstellung des Abschnitts des Systemträgers des Doppellenkersystems von Figur 3 in einer Ansicht von oben; und

- Figur 5: eine schematische Darstellung eines Einzellenkersystems mit nur einem Lenkerarbeitsplatz in einer Vorderansicht.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

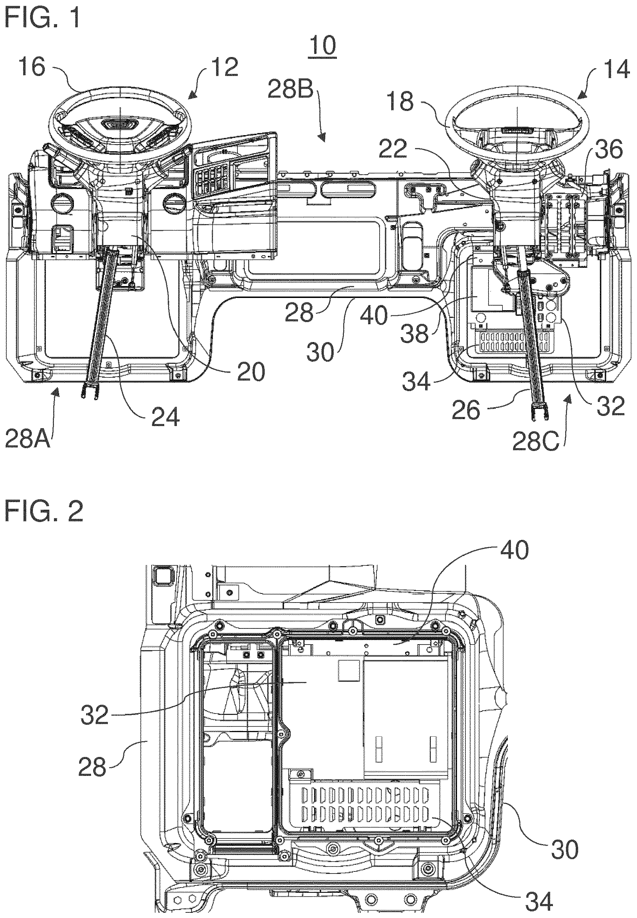

Die Figur 1 zeigt ein Doppellenkersystem 10 für ein Kraftfahrzeug. Das Kraftfahrzeug kann beispielsweise ein Fahrschul-Kraftfahrzeug sein, das beispielsweise durch einen Fahrschüler und einen Fahrlehrer gelenkt werden kann. Insbesondere kann das Kraftfahrzeug als ein Nutzfahrzeug, insbesondere ein Lastkraftwagen oder ein Omnibus, ausgebildet sein.

Das Doppellenkersystem 10 weist eine erste Lenkvorrichtung 12 und eine zweite Lenkvorrichtung 14 auf. Die ersten und zweiten Lenkvorrichtungen 12 und 14 können beispielsweise über ein nicht dargestelltes Getriebe miteinander trieblich verbunden sein Das Kraftfahrzeug kann sowohl durch die erste Lenkvorrichtung 12, zum Beispiel durch einen Fahrschüler, als auch durch die zweite Lenkvorrichtung 14, zum Beispiel durch einen Fahrlehrer, gelenkt werden. Die erste Lenkvorrichtung 12 ist eine Linkslenker-Lenkvorrichtung. Die zweite Lenkvorrichtung 14 ist eine Rechtslenker-Lenkvorrichtung.

Die erste und zweite Lenkvorrichtung 12, 14 weisen jeweils ein Lenkrad 16, 18, ein mehrteiliges Gehäuse 20, 22 und eine oder mehrere Lenkwellen 24, 26 auf. Lenkbewegungen der Lenkräder 16, 18 können über die Lenkwellen 24, 26 auf ein nachgeordnetes (nicht dargestelltes) Lenksystem des Kraftfahrzeugs übertragen werden. Die Lenkwellen 24, 26 können beispielsweise als Gelenkwellen ausgebildet sein, wie dargestellt ist. Die Lenkvorrichtungen 12, 14 sind über die Gehäuse 20, 22 an einem Systemträger 28 des Doppellenkersystems 10 angebracht.

Der Systemträger 28 ist als ein Systemträgerblech ausgebildet. Der Systemträger 28 kann einteilig oder mehrteilig ausgebildet sein. Der Systemträger 28 erstreckt sich im Wesentlichen in einer Querrichtung des Kraftfahrzeugs und in einer Vertikalrichtung. Insbesondere erstreckt sich eine Längsachse des Systemträgers 28 entlang der Querrichtung des Kraftfahrzeugs. Der Systemträger 28 weist eine, insbesondere unten und mittig angeordnete, Aussparung oder Ausbuchtung 30 für einen Motortunnel (nicht dargestellt) auf. In bzw. unter dem Motortunnel kann die Kraftmaschine des Kraftfahrzeugs angeordnet sein.

Der Systemträger 28 trägt neben den Lenkvorrichtungen 12, 14 weitere Systeme und Geräte, deren Anordnung im Bereich der Lenkerarbeitsplätze gewünscht oder notwendig ist. Insbesondere trägt der Systemträger 28 elektrische Komponenten, die zur Kabelzusammenführung und zum elektrischen Absichern und Schalten (zum Beispiel Einschalten und Ausschalten) von anderen elektrischen Komponenten des Kraftfahrzeugs ausgebildet sind.

Unter Bezugnahme auf die Figuren 1 und 2 ist gezeigt, dass der Systemträger 28 beispielsweise eine Zentralelektrik 32, z. B. zur Kabelzusammenführung des Kraftfahrzeugs, trägt. In den Figuren 1 und 2 ist ferner gezeigt, dass der Systemträger 28 einen Sicherungshalter 34 zum Halten von elektrischen Sicherungen (nicht dargestellt) des Kraftfahrzeugs trägt. Zum Beispiel kann der Sicherungshalter 34 eine Mehrzahl von Sicherungen halten, die zum elektrischen Absichern von (anderen) elektrischen Komponenten des Kraftfahrzeugs benötigt werden.

Unter Bezugnahme auf die Figuren 1, 3 und 4 ist gezeigt, dass der Systemträger 28 beispielsweise auch einen Schaltelementhalter 36 trägt. Der Schaltelementhalter 36 kann zum Halten einer Mehrzahl von Schaltelementen (nicht dargestellt) ausgebildet sein. Erfindungsgemäß ist der Schaltelementhalter 36 als ein Relaishalter ausgeführt, der eine Mehrzahl von Relais zum Schalten von (anderen) elektrischen Komponenten des Kraftfahrzeugs halten kann.

Unter erneuter Bezugnahme auf Figur 1 ist dargestellt, dass der Systemträger 28 eine umgedreht U-Form (d.h. Π-Form) aufweist. Die U-Form wird aus zwei Vertikalschenkeln 28A, 28C und einen die Vertikalschenkel 28A, 28C verbindenden Mittelschenkel 28B gebildet. Der Mittelschenkel 28B liegt oberhalb des Motortunnels bzw. der Motortunnelaussparung 30. Die erste Lenkvorrichtung 12 ist an dem ersten Vertikalschenkel 28A angebracht. Die zweite Lenkvorrichtung 14 ist an dem zweiten Vertikalschenkel 28C angebracht. Ebenso sind die Zentralelektrik 32, der Sicherungshalter 34 und der Schaltelementhalter 36 an dem zweiten Vertikalschenkel 28C angebracht. Insbesondere sind die Zentralelektrik 32 und der Sicherungshalter 34 im Wesentlichen im Bereich einer unteren Hälfte des zweiten Vertikalschenkels 28C angeordnet. Der Schaltelementhalter 36 ist im Wesentlichen im Bereich einer oberen Hälfte des Vertikalschenkels 28C angeordnet.

Insbesondere sind die Zentralelektrik 32, der Sicherungshalter 34 und der Schaltelementhalter 36 verteilt um die zweite Lenkvorrichtung 14 herum angeordnet und lösbar an dem Systemträger 28 angebracht. Die Zentralelektrik 32 und der Sicherungshalter 34 sind hinter der Lenkwelle 26 angeordnet. Die Zentralelektrik 32 ist neben der Motortunnelaussparung 30 angeordnet. Ein zentraler Bordrechner 38 kann auf die Zentralelektrik 32 aufgesteckt sein. Die Zentralelektrik 32 weist einen Kommunikationsschnittstellenbereich (siehe die sichtbaren Anschlüsse in Figur 1) zum Ankoppeln von Programmier- und Diagnosegeräten auf. Der Sicherungshalter 34 ist unterhalb der Zentralelektrik 32 und des zentralen Bordrechners 38 angeordnet. Der Sicherungshalter 34 kann lösbar an der Zentralelektrik 32 angebracht sein. Die Zentralelektrik 32 kann mittels eines Halters 40, der ungefähr mittig im Bereich des zweiten Vertikalschenkels 28C angeordnet ist, lösbar (z. B. mittels Schrauben) an dem Systemträger 28 angebracht sein. Der Halter 40 kann oberhalb der Zentralelektrik 32 angeordnet sein. Der Schaltelementhalter 36 ist oberhalb der Zentralelektrik 32 und des Sicherungshalters 34 auf einer der ersten Lenkvorrichtung 12 abgewandten Seite der zweiten Lenkvorrichtung 14 angeordnet.

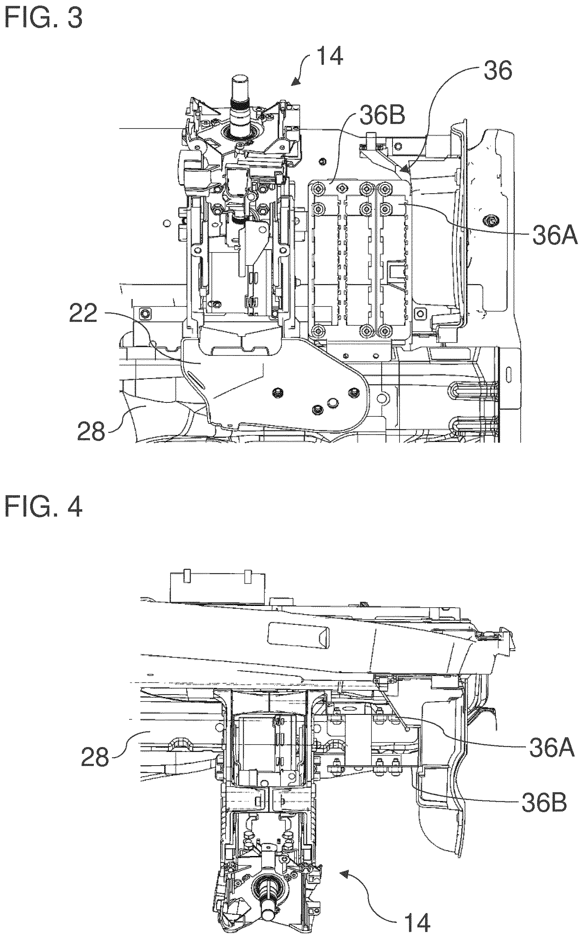

Unter Bezugnahme auf die Figuren 3 und 4 ist ein beispielhafter Schaltelementhalter 36 dargestellt. Der Schaltelementhalter 36 weist eine erste Schaltelementhalterstufe 36A und eine zweite Schaltelementhalterstufe 36B auf. Die erste Schaltelementhalterstufe 36A ist lösbar (z. B. mittels Schrauben) direkt an dem Systemträger 28 angebracht. Die zweite Schaltelementhalterstufe 36B ist über die erste Schaltelementhalterstufe 36A lösbar (z. B. mittels Schrauben) an dem Systemträger 28 angebracht. Beide Schaltelementhalterstufen 36A und 36B sind jeweils zum Halten mehrerer Schaltelemente (nicht dargestellt), zum Beispiel Relais, ausgebildet. Somit können auch bei engen Platzverhältnissen viele Schaltelemente untergebracht werden. Es ist beispielsweise auch möglich, dass der Sicherungshalter 34 auf vergleichbare Weise mehrstufig ausgebildet ist (nicht dargestellt).

Die wie hierin beispielhaft offenbarte Anordnung der Zentralelektrik 32, des Sicherungshalters 34 und des Schaltelementhalters 36 am Systemträger 28 ermöglicht eine bauraumgünstige Anordnung der Komponenten. Zugleich wird eine vergleichsweise kurze Kabelführung von Kabelbäumen zum Anschließen an die Zentralelektrik 32, den Sicherungshalter 34 und den Schaltelementhalter 36 ermöglicht, als dies beispielsweise bei Anordnung der elektrischen Komponenten auf einem Motortunnel oder an einer Fahrerhausrückwand möglich wäre.

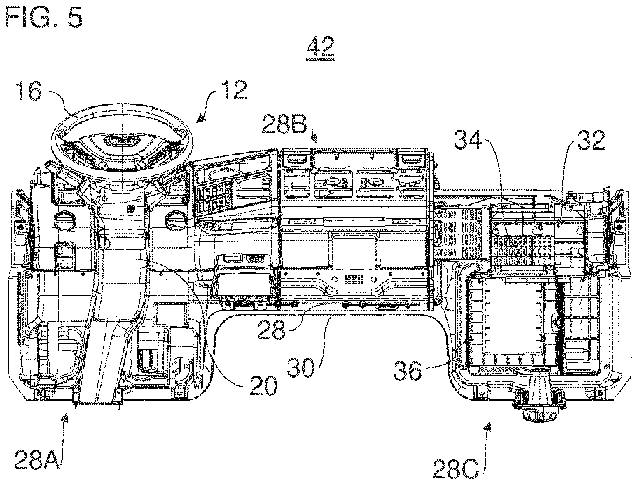

Gemäß einem weiteren Aspekt der vorliegenden Offenbarung wird zudem ein geringer Modifikationsaufwand beim Aufbau eines typischerweise in nur sehr kleinen Stückzahlen gebauten Doppellenkersystems, wie in Figur 1, gegenüber einem großen Stückzahlen gebauten Einzellenkersystems, wie in Figur 5, ermöglicht.

Die Figur 5 zeigt ein Linkslenker-Einzellenkersystem 42 zum Beispiel für ein Einzellenker-Serienfahrzeug. Das Einzellenkersystem 42 weist lediglich eine Lenkvorrichtung auf, nämlich die erste Lenkvorrichtung 12. Auf der Beifahrerseite sind am Systemträger 28 die Zentralelektrik 32, der Sicherungshalter 34 und der Schaltelementhalter 36 großflächig angebracht.

Beim Einzellenkersystem 42 bietet sich auf der Beifahrerseite des Systemträgers 28 viel Platz zum Anordnen der Zentralelektrik 32, des Sicherungshalters 34 und des Schaltelementhalters 36 an. Beispielsweis können, wie dargestellt ist, die Zentralelektrik 32 und der Sicherungshalter 34 in einem oberen Bereich (obere Hälfte) auf der Beifahrerseite des Systemträgers 28 angeordnet sein. Der Schaltelementhalter 36 kann beispielsweise unter der Zentralelektrik 32 und dem Sicherungshalter 34 angeordnet sein.

Die Anordnung der Zentralelektrik 32, des Sicherungshalters 34 und des Schaltelementhalters 36 sind beim Doppellenkersystem 10 von Figur 1 und dem Einzellenkersystem 42 von Figur 5 unterschiedlich. Es ist möglich, dass, wie dargestellt ist, die Zentralelektrik 32, der Sicherungshalter 34 und der Schaltelementhalter 36 beim Doppellenkersystem 10 nicht wie beim Einzellenkersystem 42 angeordnet werden, da beim Doppellenkersystem 10 zusätzlich die zweite Lenkvorrichtung 14 am Systemträger 28 anzubringen ist. Verwendet man jedoch die hierin vorgeschlagene Anordnung der Zentralelektrik 32, des Sicherungshalters 34 und der Schaltelementhalter 36 beim Doppellenkersystem 10, so wird insbesondere ermöglicht, dass die gleiche Verkabelung, das heißt die gleichen Kabelbäume, zum Anschließen an die Zentralelektrik 32, den Sicherungshalter 34 und den Schaltelementhalter 36 für das Doppellenkersystem 10 und das Einzellenkersystem 42 verwendet werden können. Insbesondere müssen die Kabelbäume für das Doppellenkersystem 10 nicht verlängert werden, um sie an die Zentralelektrik 32, den Sicherungshalter 34 und den Schaltelementhalter 36 anzuschließen, wie dies beispielsweise notwendig wäre, wenn diese elektrischen Komponenten auf dem Motortunnel oder an der Fahrerhausrückwand angebracht wären.

Neben der gleichen Verkabelung kommen weitere Komponenten als Gleichteile für sowohl das Doppellenkersystem 10 als auch das Einzellenkersystem 42 in Betracht, sodass sich weitere Produktionskosten einsparen lassen. Insbesondere können die Zentralelektrik 32 und der Systemträger 28 als Gleichteile konzipiert sein. Hingegen können beispielsweise der Sicherungshalter 34 und der Schaltelementhalter 36 für das Doppellenkersystem 10 modifiziert sein, um die verengten Platzverhältnisse beim Doppellenkersystem 10 zu berücksichtigen. Dadurch können mittels Modifikationen lediglich des Sicherungshalters 34 und des Schaltelementhalters 36 speziell für das Doppellenkersystem 10 viele andere Komponenten (zum Beispiel Kabelbäume, der Systemträger 28) als Gleichteile verwendet und in gleichen bzw. ähnlichen Montageschritten montiert werden. Hierdurch können insbesondere die Produktionskosten für das Doppellenkersystem 10 verringert werden.

Die Erfindung ist durch die Ansprüche definiert.

### Bezugszeichenliste

- 10: Doppellenkersystem
- 12: Erste Lenkvorrichtung
- 14: Zweite Lenkvorrichtung
- 16: Lenkrad
- 18: Lenkrad
- 20: Gehäuse
- 22: Gehäuse
- 24: Lenkwelle
- 26: Lenkwelle
- 28: Systemträger
- 28A: Erster Vertikalschenkel
- 28B: Mittelschenkel
- 28C: Zweiter Vertikalschenkel
- 30: Motortunnelaussparung
- 32: Zentralelektrik
- 34: Sicherungshalter
- 36: Schaltelementhalter
- 36A: Erste Schaltelementhalterstufe
- 36B: Zweite Schaltelementhalterstufe
- 38: Zentraler Bordrechner
- 40: Halter für Zentralelektrik
- 42: Einzellenkersystem

## Patentansprüche

1. System (10) für ein Doppellenker-Kraftfahrzeug, insbesondere ein Fahrschul-Doppellenker-Kraftfahrzeug, aufweisend:
eine erste, fahrerseitige Lenkvorrichtung (12) zum Lenken des Kraftfahrzeugs, insbesondere durch einen Fahrschüler;
eine zweite, beifahrerseitige Lenkvorrichtung (14) zum Lenken des Kraftfahrzeugs, insbesondere durch einen Fahrlehrer;
einen Systemträger (28), an dem die erste Lenkvorrichtung (12) und die zweite Lenkvorrichtung (14) angebracht sind; und
mindestens eine elektrische Komponente (32, 34, 36) aufweisend:
- eine Zentralelektrik (32) des Kraftfahrzeugs, die zur Kabelzusammenführung ausgebildet ist,
- einen Sicherungshalter (34) zum Halten von einer oder mehreren Sicherungen des Kraftfahrzeugs, der zur elektrischen Absicherung ausgebildet ist, und/oder
- einen Relaishalter (36) zum Halten von Relais (36) des Kraftfahrzeugs, der zum Schalten weiterer elektrischer Komponenten des Kraftfahrzeugs ausgebildet ist,
wobei die mindestens eine elektrische Komponente (32, 34, 36) neben der zweiten, beifahrerseitigen Lenkvorrichtung (14) am Systemträger (28) angebracht ist,
wobei der Systemträger (28) eine umgedrehte U-Form mit einer mittigen Motortunnelaussparung (30) aufweist, und die zweite, beifahrerseitige Lenkvorrichtung (14) und die mindestens eine elektrische Komponente (32, 34, 36) an demselben Vertikalschenkel (28C) der umgedrehten U-Form des Systemträgers (28) angebracht sind.

2. System (10) nach Anspruch 1, wobei:
mehrere elektrische Komponenten (32, 34, 36) vorgesehen sind, die zumindest teilweise beabstandet zueinander und/oder verteilt um die zweite Lenkvorrichtung (14) herum an dem Systemträger (28) angebracht sind.

3. System (10) nach einem der vorherigen Ansprüche, wobei:
mindestens eine elektrische Komponente, insbesondere der Relaishalter (36) und/oder der Sicherungshalter (34), mehrlagig und/oder mehrstufig ausgebildet ist, insbesondere zum Halten von Elementen in mehreren Ebenen; und/oder
der Relaishalter (36) mehrstufig an dem Systemträger (28) anbringbar ist, insbesondere mit einer ersten Schaltelementhalterstufe (36A) zur Montage an den Systemträger (28) und einer zweiten Schaltelementhalterstufe (36B) zur Montage an die erste Schaltelementhalterstufe (36A); und/oder
der Sicherungshalter (34) mehrstufig an dem Systemträger (28) anbringbar ist, insbesondere mit einer ersten Sicherungshalterstufe zur Montage an den Systemträger (28) und einer zweiten Sicherungshalterstufe zur Montage an die erste Sicherungshalterstufe.

4. System (10) nach einem der vorherigen Ansprüche, wobei:
die Zentralelektrik (32) und/oder der Sicherungshalter (34) im Wesentlichen im Bereich einer unteren Hälfte des Vertikalschenkels (28C) angeordnet sind; und/oder
der Relaishalter (36) im Wesentlichen im Bereich einer oberen Hälfte des Vertikalschenkels (28C) angeordnet ist.

5. System (10) nach einem der vorherigen Ansprüche, wobei:
mindestens eine elektrische Komponente, insbesondere die Zentralelektrik (32) und/oder der Sicherungshalter (34), hinter einer Lenkwelle (26) der zweiten Lenkvorrichtung (14) angeordnet ist, betrachtet in einer Blickrichtung eines auf einem Fahrzeugsitz sitzenden Insassen des Kraftfahrzeugs mit Blickrichtung auf den Systemträger (28); und/oder
mindestens eine elektrische Komponente, insbesondere die Zentralelektrik (32), einen Kommunikationsschnittstellenbereich (38) des Kraftfahrzeugs zur Ankoppelung von Programmier- und Diagnosegeräten aufweist; und/oder
auf mindestens eine elektrische Komponente, insbesondere eine die (32), ein zentraler Bordrechner (38) aufgesteckt ist; und/oder
mindestens eine elektrische Komponente, insbesondere die Zentralelektrik (32) und/oder der Sicherungshalter (34), insbesondere horizontal neben der Motortunnelaussparung (30) des Systemträgers (28) angeordnet ist.

6. System (10) nach einem der vorherigen Ansprüche, wobei:
mindestens eine elektrische Komponente, insbesondere der Relaishalter (36), auf einer der ersten Lenkvorrichtung (12) abgewandten Seite der zweiten Lenkvorrichtung (14) angeordnet ist; und/oder
mindestens eine elektrische Komponente, insbesondere die Zentralelektrik (32) und/oder der Sicherungshalter (34), auf einer der ersten Lenkvorrichtung (12) zugewandten Seite der zweiten Lenkvorrichtung (14) angeordnet ist.

7. System (10) nach einem der vorherigen Ansprüche, wobei:
der Systemträger (28) als ein Systemträgerblech ausgebildet ist; und/oder
eine Längsachse des Systemträgers (28) in einer Querrichtung des Kraftfahrzeugs verläuft.

8. System (10) für ein Doppellenker-Kraftfahrzeug, wobei:
das System (10), insbesondere der Systemträger (28), zum wahlweisen Aufbau eines Einzellenker-Kraftfahrzeugs aufweisend lediglich eine erste, fahrerseitige Lenkvorrichtung (12) und eines Doppellenker-Kraftfahrzeugs aufweisend die erste, fahrerseitige Lenkvorrichtung (12) und eine zweite, beifahrerseitige Lenkvorrichtung (14) konfiguriert ist,
wobei das System (10) beim Aufbau eines Doppellenker-Kraftfahrzeugs aufweist:
die erste, fahrerseitige Lenkvorrichtung (12) zum Lenken des Kraftfahrzeugs beim Aufbau des Einzellenker-Kraftfahrzeugs und des Doppellenker-Kraftfahrzeugs;
die zweite, beifahrerseitige Lenkvorrichtung (14) zum Lenken des Kraftfahrzeugs beim Aufbau des Doppellenker-Kraftfahrzeugs;
den Systemträger (28), an dem die erste, fahrerseitige Lenkvorrichtung (12) bei dem Einzellenker-Kraftfahrzeug angebracht ist und an dem die erste, fahrerseitige Lenkvorrichtung (12) und die zweite, beifahrerseitige Lenkvorrichtung (14) bei dem Doppellenker-Kraftfahrzeug angebracht sind; und
mindestens eine elektrische Komponente (32, 34, 36) aufweisend:
- eine Zentralelektrik (32) des Kraftfahrzeugs, die zur Kabelzusammenführung ausgebildet ist,
- einen Sicherungshalter (34) zum Halten von einer oder mehreren Sicherungen des Kraftfahrzeugs, der zur elektrischen Absicherung ausgebildet ist, und/oder
- einen Relaishalter (36) zum Halten von Relais (36) des Kraftfahrzeugs, der zum Schalten weiterer elektrischer Komponenten des Kraftfahrzeugs ausgebildet ist,
wobei bei dem Doppellenker-Kraftfahrzeug die mindestens eine elektrische Komponente (32, 34, 36) neben der zweiten, beifahrerseitigen Lenkvorrichtung (14) am Systemträger (28) angebracht ist,
wobei der Systemträger (28) eine umgedrehte U-Form mit einer mittigen Motortunnelaussparung (30) aufweist.

9. System (10) nach Anspruch 8, wobei:
die mindestens eine elektrische Komponente (32, 34, 36) beim Einzellenker-Kraftfahrzeug zumindest teilweise an einer Position an dem Systemträger (28) angebracht ist, an dem die zweite Lenkvorrichtung (14) beim Doppellenker-Kraftfahrzeug an dem Systemträger (28) angebracht ist.

10. System (10) nach Anspruch 8 oder Anspruch 9, wobei:
das Einzellenker-Kraftfahrzeug als ein Linkslenker-Kraftfahrzeug ausgebildet ist und lediglich die erste Lenkvorrichtung (12) aufweist; oder
das Einzellenker-Kraftfahrzeug als ein Rechtslenker Kraftfahrzeug ausgebildet ist und lediglich die zweite Lenkvorrichtung (14) aufweist; oder
das Einzellenker-Kraftfahrzeug wahlweise als ein Linkslenker-Kraftfahrzeug mit lediglich der ersten Lenkvorrichtung (12) oder ein Rechtslenker-Kraftfahrzeug mit lediglich der zweiten Lenkvorrichtung (14) ausbildbar ist.

11. System (10) nach einem der Ansprüche 8 bis 10, wobei:
mindestens eine Verkabelung zum Anschließen an die mindestens eine elektrische Komponente (32, 34, 36) beim Einzellenker-Kraftfahrzeug und mindestens eine Verkabelung zum Anschließen an die mindestens eine elektrische Komponente (32, 34, 36) beim Doppellenker-Kraftfahrzeug als Gleichteile ausgebildet sind.

12. System (10) nach einem der Ansprüche 8 bis 11, wobei:
der Systemträger (28) beim Einzellenker-Kraftfahrzeug und der Systemträger (28) beim Doppellenker-Kraftfahrzeug als Gleichteile ausgebildet sind; und/oder
die elektrischen Komponenten (32, 34, 36) zumindest teilweise als Gleichteile ausgebildet sind; und/oder
die Zentralelektrik (32) beim Einzellenker-Kraftfahrzeug und eine Zentralelektrik (32) beim Doppellenker-Kraftfahrzeug als Gleichteile ausgebildet sind; und/oder
der Sicherungshalter (34) beim Einzellenker-Kraftfahrzeug und ein Sicherungshalter (34) beim Doppellenker-Kraftfahrzeug als unterschiedliche Teile ausgebildet sind; und/oder
der Relaishalter (36) beim Einzellenker-Kraftfahrzeug und der Relaishalter (36) beim Doppellenker-Kraftfahrzeug als unterschiedliche Teile ausgebildet sind.

13. Kraftfahrzeug, insbesondere Nutzfahrzeug, mit einem System (10) nach einem der vorherigen Ansprüche.

## Claims

1. A system (10) for a double-steering motor vehicle, in particular a driving-school double-steering motor vehicle, having:
a first, driver-side, steering apparatus (12) for steering the motor vehicle, in particular by a driving learner;
a second, passenger-side, steering apparatus (14) for steering the motor vehicle, in particular by a driving trainer;
a system carrier (28) on which the first steering apparatus (12) and the second steering apparatus (14) are fitted; and
at least one electrical component (32, 34, 36) having:
- a central electrical unit (32) of the motor vehicle, which is designed for cable combination,
- a fuse holder (34) for holding one or more fuses of the motor vehicle, which is designed for electrical protection, and/or
- a relay holder (36) for holding relays (36) of the motor vehicle, which is designed for switching further electrical components of the motor vehicle,
wherein the at least one electrical component (32, 34, 36) is fitted on the system carrier (28) next to the second, passenger-side, steering apparatus (14),
wherein the system carrier (28) has an inverted U shape with a central engine tunnel clearance (30), and the second, passenger-side, steering apparatus (14) and the at least one electrical component (32, 34, 36) are fitted on the same vertical leg (28C) of the inverted U shape of the system carrier (28).

2. The system (10) according to Claim 1, wherein:
a plurality of electrical components (32, 34, 36) are provided which are fitted on the system carrier (28) so as to be at least partially spaced apart from one another and/or distributed around the second steering apparatus (14).

3. The system (10) according to either of the preceding claims, wherein:
at least one electrical component, in particular the relay holder (36) and/or the fuse holder (34), is of multilayered and/or multistaged design, in particular for holding elements in a plurality of planes; and/or
the relay holder (36) can be fitted in a multistaged manner on the system carrier (28), in particular with a first switching element holder stage (36A) for mounting on the system carrier (28) and a second switching element holder stage (36B) for mounting on the first switching element holder stage (36A); and/or
the fuse holder (34) can be fitted in a multistaged manner on the system carrier (28), in particular with a first fuse holder stage for mounting on the system carrier (28) and a second fuse holder stage for mounting on the first fuse holder stage.

4. The system (10) according to one of the preceding claims, wherein:
the central electrical unit (32) and/or the fuse holder (34) are or is arranged substantially in the region of a lower half of the vertical leg (28C); and/or
the relay holder (36) is arranged substantially in the region of an upper half of the vertical leg (28C) .

5. The system (10) according to one of the preceding claims, wherein:
at least one electrical component, in particular the central electrical unit (32) and/or the fuse holder (34), is arranged behind a steering shaft (26) of the second steering apparatus (14) as viewed in a viewing direction of a passenger of the motor vehicle sitting on a vehicle seat looking in the direction of the system carrier (28); and/or
at least one electrical component, in particular the central electrical unit (32), has a communication interface region (38) of the motor vehicle for the coupling of programming and diagnostic devices; and/or
a central on-board computer (38) is plugged onto at least one electrical component, in particular a the (32); and/or
at least one electrical component, in particular the central electrical unit (32) and/or the fuse holder (34), is arranged in particular horizontally next to the engine tunnel clearance (30) of the system carrier (28).

6. The system (10) according to one of the preceding claims, wherein:
at least one electrical component, in particular the relay holder (36), is arranged on a side of the second steering apparatus (14) that faces away from the first steering apparatus (12); and/or
at least one electrical component, in particular the central electrical unit (32) and/or the fuse holder (34), is arranged on a side of the second steering apparatus (14) that faces the first steering apparatus (12).

7. The system (10) according to one of the preceding claims, wherein:
the system carrier (28) is designed as a system carrier plate; and/or
a longitudinal axis of the system carrier (28) extends in a transverse direction of the motor vehicle.

8. A system (10) for a double-steering motor vehicle, wherein:
the system (10), in particular the system carrier (28), is configured for the selective creation of a single-steering motor vehicle having only a first, driver-side, steering apparatus (12) and a double-steering motor vehicle having the first, driver-side,
steering apparatus (12) and a second, passenger-side, steering apparatus (14),
wherein, with the creation of a double-steering motor vehicle, the system (10) has:
the first, driver-side, steering apparatus (12) for steering the motor vehicle when creating the single-steering motor vehicle and the double-steering motor vehicle;
the second, passenger-side, steering apparatus (14) for steering the motor vehicle when creating the double-steering motor vehicle;
the system carrier (28), on which the first, driver-side, steering apparatus (12) is fitted in the single-steering motor vehicle and on which the first, driver-side, steering apparatus (12) and the second, passenger-side, steering apparatus (14) are fitted in the double-steering motor vehicle; and
at least one electrical component (32, 34, 36) having:
- a central electrical unit (32) of the motor vehicle, which is designed for cable combination,
- a fuse holder (34) for holding one or more fuses of the motor vehicle, which is designed for electrical protection, and/or
- a relay holder (36) for holding relays (36) of the motor vehicle, which is designed for switching further electrical components of the motor vehicle,
wherein in the double-steering motor vehicle the at least one electrical component (32, 34, 36) is fitted on the system carrier (28) next to the second, passenger-side, steering apparatus (14),
wherein the system carrier (28) has an inverted U shape with a central engine tunnel clearance (30).

9. The system (10) according to Claim 8, wherein
the at least one electrical component (32, 34, 36) in the single-steering motor vehicle is fitted at least partially on the system carrier (28) at a position at which the second steering apparatus (14) in the double-steering motor vehicle is fitted on the system carrier (28).

10. The system (10) according to Claim 8 or Claim 9, wherein:
the single-steering motor vehicle is designed as a left-hand-drive motor vehicle and has only the first steering apparatus (12); or
the single-steering motor vehicle is designed as a right-hand-drive motor vehicle and has only the second steering apparatus (14); or
the single-steering motor vehicle can be designed selectively as a left-hand-drive motor vehicle having only the first steering apparatus (12) or a right-hand-drive motor vehicle having only the second steering apparatus (14).

11. The system (10) according to one of Claims 8 to 10, wherein:
at least one cable system for connecting to the at least one electrical component (32, 34, 36) in the single-steering motor vehicle and at least one cable system for connecting to the at least one electrical component (32, 34, 36) in the double-steering motor vehicle are designed as identical parts.

12. The system (10) according to one of Claims 8 to 11, wherein:
the system carrier (28) in the single-steering motor vehicle and the system carrier (28) in the double-steering motor vehicle are designed as identical parts; and/or
the electrical components (32, 34, 36) are at least partially designed as identical parts; and/or
the central electrical unit (32) in the single-steering motor vehicle and a central electrical unit (32) in the double-steering motor vehicle are designed as identical parts; and/or
the fuse holder (34) in the single-steering motor vehicle and a fuse holder (34) in the double-steering motor vehicle are designed as different parts; and/or
the relay holder (36) in the single-steering motor vehicle and the relay holder (36) in the double-steering motor vehicle are designed as different parts.

13. A motor vehicle, in particular a commercial vehicle, having a system (10) according to one of the preceding claims.

## Revendications

1. Système (10) destiné à un véhicule automobile à double direction, en particulier un véhicule automobile à double direction d'auto-école, ledit système comprenant :
un premier dispositif de direction côté conducteur (12) destiné à diriger le véhicule automobile, en particulier par le biais d'un apprenti conducteur ;
un deuxième dispositif de direction côté passager (14) destiné à diriger le véhicule automobile, en particulier par le biais d'un moniteur d'auto-école ;
un support de système (28) auquel le premier dispositif de direction (12) et le deuxième dispositif de direction (14) sont fixés ; et
au moins un composant électrique (32, 34, 36) qui comporte :
- un système électrique central (32) du véhicule automobile, lequel système électrique est conçu pour réunir des câbles,
- un porte-fusibles (34) qui est destiné à porter un ou plusieurs fusibles du véhicule automobile et qui est conçu pour réaliser la protection électrique, et/ou
- un porte-relais (36) qui est destiné à porter des relais (36) du véhicule automobile et qui est conçu pour effectuer la commutation d'autres composants électriques du véhicule automobile,
l'au moins un composant électrique (32, 34, 36) étant fixé au support de système (28) à côté du deuxième dispositif de direction côté passager (14),
le support de système (28) ayant la forme d'un U inversé pourvu d'un évidement formant tunnel de moteur central (30), et le deuxième dispositif de direction côté passager (14) et l'au moins un composant électrique (32, 34, 36) étant fixés à la même branche verticale (28C) de la forme de U inversé du support de système (28).

2. Système (10) selon la revendication 1 :
plusieurs composants électriques (32, 34, 36) étant prévus, qui sont fixés au support de système (28) au moins partiellement à distance les uns des autres et/ou en étant répartis autour du deuxième dispositif de direction (14).

3. Système (10) selon l'une des revendications précédentes :
au moins un composant électrique, en particulier le porte-relais (36) et/ou le porte-fusibles (34), ayant une conception multicouche et/ou multi-étage, en particulier pour maintenir des éléments situés dans plusieurs plans ; et/ou
le porte-relais (36) pouvant être fixé sur plusieurs étages au support de système (28), en particulier un premier étage de support d'élément de commutation (36A) étant destiné au montage sur le support de système (28) et un deuxième étage de support d'élément de commutation (36B) étant destiné au montage sur le premier étage de support d'élément de commutation (36A) ; et/ou
le porte-fusibles (34) pouvant être fixé au support de système (28) sur plusieurs étages, en particulier un premier étage de porte-fusibles étant destiné au montage sur le support de système (28) et un deuxième étage de porte-fusibles étant destiné au montage sur le premier porte-fusibles.

4. Système (10) selon l'une des revendications précédentes :
le système électrique central (32) et/ou le porte-fusibles (34) étant disposés sensiblement au niveau d'une moitié inférieure de la branche verticale (28C) ; et/ou
le porte-relais (36) étant disposé sensiblement au niveau d'une moitié supérieure de la branche verticale (28C) .

5. Système (10) selon l'une des revendications précédentes :
au moins un composant électrique, en particulier le système électrique central (32) et/ou le porte-fusibles (34), étant disposé derrière un arbre de direction (26) du deuxième dispositif de direction (14), vu dans une direction de vision d'un occupant du véhicule automobile assis sur un siège de véhicule et regardant en direction du support de système (28) ; et/ou
au moins un composant électrique, en particulier le système électrique central (32), comportant une zone d'interface de communication (38) du véhicule automobile destiné au raccordement d'unités de programmation et de diagnostic ; et/ou
un ordinateur de bord central (38) étant monté sur au moins un composant électrique, en particulier un le (32) ; et/ou
au moins un composant électrique, en particulier le système électrique central (32) et/ou le porte-fusibles (34), étant disposé en particulier horizontalement à côté de l'évidement formant tunnel de moteur (30) du support de système (28).

6. Système (10) selon l'une des revendications précédentes :
au moins un composant électrique, en particulier le porte-relais (36), étant disposé sur un côté du deuxième dispositif de direction (14) qui est opposé au premier dispositif de direction (12) ; et/ou
au moins un composant électrique, en particulier le système électrique central (32) et/ou le porte-fusibles (34), étant disposé sur un côté du deuxième dispositif de direction (14) qui est dirigé vers le premier dispositif de direction (12).

7. Système (10) selon l'une des revendications précédentes :
le support de système (28) étant réalisé sous la forme d'une tôle de support de système ; et/ou
un axe longitudinal du système de support (28) s'étendant dans une direction transversale du véhicule automobile.

8. Système (10) destiné à un véhicule automobile à double direction :
le système (10), en particulier le support de système (28), étant conçu pour construire au choix un véhicule automobile à simple direction comportant un seul premier dispositif de direction côté conducteur (12) et un véhicule automobile à double direction comportant le premier dispositif de direction côté conducteur (12) et un deuxième dispositif de direction côté passager (14),
le système (10) comportant dans le cas de la construction d'un véhicule automobile à double direction :
le premier dispositif de direction côté conducteur (12) destiné à diriger le véhicule automobile dans le cas de la construction du véhicule automobile à simple direction et du véhicule automobile à double direction ;
le deuxième dispositif de direction côté passager (14) destiné à diriger le véhicule automobile dans le cas de la construction du véhicule automobile à double direction ;
le support de système (28) auquel est fixé le premier dispositif de direction côté conducteur (12) dans le cas du véhicule automobile à simple direction et auquel sont fixés le premier dispositif de direction côté conducteur (12) et le deuxième dispositif de direction côté passager (14) dans le cas du véhicule automobile à double direction ; et
au moins un composant électrique (32, 34, 36) qui comporte :
- un système électrique central (32) du véhicule automobile qui est conçu pour réunir des câbles,
- un porte-fusibles (34) qui est destiné à porter un ou plusieurs fusibles du véhicule automobile et qui est destiné à réaliser la protection électrique, et/ou
- un porte-relais (36) qui est destiné à porter des relais (36) du véhicule automobile et qui est destiné à commuter d'autres composants électriques du véhicule automobile,
dans le cas du véhicule automobile à double direction l'au moins un composant électrique (32, 34, 36) étant fixé au support de système (28) à côté du deuxième dispositif de direction côté passager (14),
le support de système (28) ayant la forme d'un U inversé pourvu d'un évidement formant tunnel de moteur central (30).

9. Système (10) selon la revendication 8 :
l'au moins un composant électrique (32, 34, 36) étant fixé, dans le cas du véhicule automobile à simple direction, au moins partiellement à une position au niveau du support de système (28) auquel le deuxième dispositif de direction (14) est fixé au support de système (28) dans le cas du véhicule automobile à double direction.

10. Système (10) selon la revendication 8 ou la revendication 9 :
le véhicule automobile à simple direction étant conçu comme un véhicule automobile à conduite à gauche et ne comportant que le premier dispositif de direction (12) ; ou
le véhicule automobile à simple direction étant conçu comme un véhicule automobile à conduite à droite et ne comportant que le deuxième dispositif de direction (14) ; ou
le véhicule automobile à simple direction pouvant être conçu au choix comme un véhicule automobile à conduite à gauche muni uniquement du premier dispositif de direction (12) ou un véhicule automobile à conduite à droite muni uniquement du deuxième dispositif de direction (14).

11. Système (10) selon l'une des revendications 8 à 10 :
au moins un câblage destiné au raccordement à l'au moins un composant électrique (32, 34, 36) dans le cas du véhicule automobile à simple direction et au moins un câblage destiné au raccordement à l'au moins un composant électrique (32, 34, 36) dans le cas du véhicule automobile à double direction étant conçus comme des pièces identiques.

12. Système (10) selon l'une des revendications 8 à 11 :
le support de système (28) dans le cas du véhicule automobile à simple direction et le support de système (28) dans le cas du véhicule automobile à double direction étant conçus comme des pièces identiques ; et/ou
les composants électriques (32, 34, 36) étant conçus au moins partiellement comme des pièces identiques ; et/ou
le système électrique central (32) dans le cas du véhicule automobile à simple direction et un système électrique central (32) dans le cas du véhicule automobile à double direction étant conçus comme des pièces identiques ; et/ou
le porte-fusibles (34) dans le cas du véhicule automobile à simple direction et un porte-fusibles (34) dans le cas du véhicule automobile à double direction étant conçus comme des pièces différentes ; et/ou
le porte-relais (36) dans le cas du véhicule automobile à simple direction et le porte-relais (36) dans le cas du véhicule automobile à double direction étant conçus comme des pièces différentes.

13. Véhicule automobile, en particulier véhicule utilitaire, comprenant un système (10) selon l'une des revendications précédentes.
